# FASCICULE DE BREVET EUROPEEN

(11) **EP 3 802 056 B1**
(45) Date de publication et mention de la délivrance du brevet: **30.03.2022**
(21) Numéro de dépôt: 19737853.2
(22) Date de dépôt: 06.06.2019
(51) Int. Cl.: B29C 49/42, B29C 49/06, B29C 49/36, B29C 49/64, B29C 49/78

(54) **INSTALLATION DE PRODUCTION DE RÉCIPIENTS À ARRÊT D'URGENCE SÉLECTIF**
ANLAGE ZUR HERSTELLUNG VON BEHÄLTERN MIT WÄHLBAREM NOTSTOP
INSTALLATION FOR PRODUCING CONTAINERS, WITH SELECTIVE EMERGENCY STOP

(30) Priorité: 07.06.2018 FR 1854934
(43) Date de publication de la demande: 14.04.2021
(73) Titulaire: Sidel Participations, 76930 Octeville-sur-Mer (FR)
(72) Inventeur: SANTAIS, Franck, 76930 Octeville-sur-mer (FR)
(74) Mandataire: Sidel Group
(86) Numéro de dépôt international: PCT/FR2019/051366
(87) Numéro de publication internationale: WO 2019/234364

(56) Documents cités:
- EP-A2- 3 239 079
- US-A1- 2013 277 892
- US-A1- 2016 214 306
- US-A1- 2017 028 610

## Description

L'invention a trait à la production des récipients à partir d'ébauches en matière plastique (notamment en PET). Elle concerne, plus particulièrement, une installation de production de récipients et un procédé de pilotage d'une telle installation.

Une installation de production de récipients comprend, classiquement, une unité de formage des récipients, une unité de traitement préalable (par ex. thermique) des ébauches, et un dispositif auxiliaire de transfert des ébauches de l'unité de traitement à l'unité de formage.

L'unité de formage comprend, de manière connue, un convoyeur principal (par ex. un carrousel), qui définit un trajet de formage (typiquement circulaire), une pluralité de postes de formage portés par le convoyeur principal et incluant chacun un moule (par ex. s'ouvrant en portefeuille) à l'empreinte d'un récipient, et une motorisation principale couplée au convoyeur principal et pilotée par une unité de contrôle pour déplacer les postes de formage le long du trajet de formage.

L'unité de traitement des ébauches comprend, de manière connue, un convoyeur secondaire (incluant typiquement une chaîne circulant sur des roues) définissant un trajet de traitement (formé par ex. de portions rectilignes et de portions courbes), une pluralité d'organes de préhension des ébauches, portés par le convoyeur secondaire, et au moins une paroi rayonnante devant laquelle défilent les ébauches.

Le dispositif auxiliaire de transfert des ébauches de l'unité de traitement à l'unité de formage comprend, de manière connue, un convoyeur auxiliaire (par ex. une roue) définissant un trajet de transfert (typiquement circulaire) tangent au trajet de traitement et au trajet de formage, et une pluralité d'organes de préhension des ébauches portés par le convoyeur auxiliaire.

Une installation de ce type est très schématiquement décrite dans le brevet européen EP1851517 (Sidel Participations).

Le déplacement des ébauches le long du trajet de traitement, du trajet de transfert et du trajet de formage doit se faire à la même cadence. Il est donc nécessaire de coupler le convoyeur secondaire et le convoyeur auxiliaire au convoyeur principal. Ce couplage est classiquement effectué de manière physique, au moyen de courroies, qui circulent sur des poulies équipant respectivement le convoyeur principal, le convoyeur secondaire et le convoyeur auxiliaire.

Il arrive cependant que l'unité de formage soit affectée d'un défaut nécessitant son arrêt d'urgence pour permettre une opération humaine de maintenance. Un défaut typique est un grippage du mécanisme d'ouverture et de fermeture d'un moule, ou encore lorsqu'une pièce, déformée par l'usure ou la fatigue, se déforme, se fissure, ou se casse.

Compte tenu du couplage physique du convoyeur secondaire au convoyeur principal, l'arrêt d'urgence de l'unité de formage induit l'arrêt simultané de l'unité de traitement.

Il en résulte que les ébauches présentes dans l'unité de traitement sont arrêtées, et sont surexposées au traitement, c'est-à-dire exposées à celui-ci pendant une durée supérieure à la durée nominale correspondant à la cadence de production. Lorsque le traitement est un conditionnement thermique (c'est-à-dire une chauffe, généralement conduite au moyen de lampes halogènes), la surexposition peut provoquer la fonte des ébauches, voire même leur brûlure. Lorsque le traitement est une décontamination aux ultraviolets (généralement conduite au moyen de lampes à décharge et vapeur de mercure), la surexposition est susceptible de modifier les propriétés de la matière.

Pour éviter une telle surexposition, la désactivation des parois rayonnantes est généralement commandée en même temps que l'arrêt de l'unité de formage. Certes, on évite la surexposition, mais les ébauches présentes dans l'unité de traitement sont perdues et celle-ci doit en être vidangée avant que la production ne puisse reprendre ; en outre, les parois rayonnantes doivent être progressivement réactivées. Cette réactivation prend du temps, notamment dans le cas de lampes halogènes qui nécessitent une longue préchauffe en raison de leur importante inertie thermique.

Le document US 2016/214306 décrit une installation de production de récipients comprenant une unité de formage, un dispositif auxiliaire de transfert, et une unité de traitement, c'est-à-dire un four, dont chacun possède un élément rotatif équipé d'une motorisation indépendante, et synchronisé l'un par rapport à l'autre par une unité de contrôle. En présence d'un défaut, les éléments rotatifs sont désynchronisés de manière à être sans entraînement pour pouvoir tourner librement et ils sont tous arrêtés. Afin d'éviter d'endommager les éléments rotatifs, la synchronisation doit être garantie non seulement en étal de fonctionnement, mais doit également être absolument maintenue même en cas de présence d'un défaut telle qu'une panne de courant. Pour ce faire, la synchronisation des éléments rotatifs est maintenue par un dispositif mécanique.

Il résulte d'une telle procédure d'arrêt d'urgence une perte de productivité. Rappelons que les installations modernes de production de récipients tournent à des cadences de l'ordre de 40 000 récipients par heure : ainsi, à chaque minute perdue, ce sont près de 700 récipients qui sont perdus.

Un premier objectif de l'invention est de limiter, à l'occasion d'une procédure d'arrêt d'urgence d'une l'installation de production de récipients, la perte de récipients.

Un deuxième objectif est d'accélérer la reprise de la production une fois la maintenance effectuée et rétabli le bon fonctionnement de l'installation.

A cet effet, il est proposé, en premier lieu, une installation de production de récipients à partir d'ébauches en matière plastique, qui comprend :
- Une unité de formage des récipients à partir des ébauches, qui comprend :
   - Un convoyeur principal définissant un trajet de formage ;
   - Une pluralité de postes de formage portés par le convoyeur principal et incluant chacun un moule à l'empreinte d'un récipient ;
   - Une motorisation principale couplée au convoyeur principal pour déplacer les postes de formage le long du trajet de formage ;
- Une unité de traitement préalable des ébauches, qui comprend :
   - Un convoyeur secondaire définissant un trajet de traitement ;
   - Une pluralité d'organes de préhension des ébauches, portés par le convoyeur secondaire ;
   - Une motorisation secondaire couplée au convoyeur secondaire, indépendante de la motorisation principale et pilotée par l'unité de contrôle ;
- Un dispositif auxiliaire de transfert des ébauches de l'unité de traitement à l'unité de formage, qui comprend :
   - Un convoyeur auxiliaire définissant un trajet de transfert tangent au trajet de traitement en un point de transfert, et au trajet de formage en un point de chargement ;
   - Une pluralité d'organes de préhension des ébauches, portés par le convoyeur auxiliaire ;
   - Une motorisation auxiliaire couplée au convoyeur auxiliaire, indépendante de la motorisation principale et pilotée par l'unité de contrôle ;
- Une unité de contrôle pilotant la motorisation principale ;
- Une unité de contrôle pilotant la motorisation principale, la motorisation secondaire et la motorisation auxiliaire, et programmée pour :
   ∘ Tant qu'aucun défaut n'est détecté au moins dans l'unité de formage, synchroniser la motorisation auxiliaire sur la motorisation principale, et la motorisation secondaire sur la motorisation auxiliaire ;
   ∘ Dès lors qu'un défaut est détecté dans l'unité de formage, interrompre l'alimentation en ébauches de l'unité de traitement, commander la désynchronisation de la motorisation auxiliaire de la motorisation principale, commander l'arrêt de la motorisation principale, et, le cas échéant, commander l'éjection des ébauches parvenant à un point d'éjection situé en amont du point de chargement.

De la sorte, l'arrêt de l'unité de formage peut être commandé tout en maintenant l'unité de traitement en mouvement. L'intervention sur l'unité de formage peut être anticipée, ce qui limite les pertes et permet d'accroître la productivité. En outre, la reprise de la production peut être accélérée.

Diverses caractéristiques supplémentaires peuvent être prévues, seules ou en combinaison.

Ainsi, par exemple, l'unité de contrôle est programmée pour, dès lors que l'unité de traitement est détectée vide d'ébauches, commander la désynchronisation de la motorisation secondaire de la motorisation auxiliaire.

L'unité de traitement peut en outre être programmée pour, dès lors que le dispositif auxiliaire de transfert est détecté vide d'ébauches, commander l'arrêt de la motorisation auxiliaire.

Dans ce cas, l'unité de traitement est avantageusement programmée pour maintenir en mouvement la motorisation secondaire de manière désynchronisée de la motorisation auxiliaire.

Chaque motorisation est un par ex. un moteur-couple.

Selon un mode de réalisation, l'installation comprend par ailleurs un capotage définissant une enceinte principale dans laquelle est logée l'unité de formage, et une enceinte secondaire séparée de l'enceinte principale et dans laquelle est au moins partiellement logée l'unité de traitement, ce capotage comprenant :
- Un châssis définissant au moins un dormant principal qui borde l'enceinte principale, et un dormant secondaire qui borde l'enceinte secondaire ;
- Au moins un ouvrant principal monté sur le dormant principal entre une position ouverte dans laquelle l'ouvrant principal est écarté du dormant principal pour donner accès à l'enceinte principale par l'extérieur, et une position fermée dans laquelle l'ouvrant principal est logé dans le dormant principal pour interdire l'accès à l'enceinte principale par l'extérieur ;
- Un système de verrouillage et déverrouillage de l'ouvrant principal en position fermée, relié à l'unité de contrôle ;

Dans ce cas, l'unité de contrôle est avantageusement programmée pour, dès lors que la motorisation principale est détectée à l'arrêt, commander le déverrouillage de l'ouvrant secondaire.

Il est proposé, en deuxième lieu, un procédé de pilotage d'une installation de production de récipients telle que présentée ci-dessus, qui comprend les opérations, commandées par l'unité de contrôle, consistant à :
∘ Tant qu'aucun défaut n'est détecté au moins dans l'unité de formage, synchroniser la motorisation auxiliaire sur la motorisation principale, et la motorisation secondaire sur la motorisation auxiliaire ;
∘ Dès lors qu'un défaut est détecté dans l'unité de formage, interrompre l'alimentation en ébauches de l'unité de traitement, commander la désynchronisation de la motorisation auxiliaire de la motorisation principale, commander l'arrêt de la motorisation principale, et, le cas échéant, commander l'éjection des ébauches parvenant à un point d'éjection situé en amont du point de chargement.

Les opérations supplémentaires suivantes peuvent être prévues, commandées par l'unité de contrôle :
∘ Redémarrer la motorisation principale ;
∘ Redémarrer la motorisation auxiliaire si elle est détectée à l'arrêt ;
∘ Resynchroniser la motorisation auxiliaire sur la motorisation principale ;
∘ Débloquer l'alimentation en ébauches de l'unité de traitement.

D'autres objets et avantages de l'invention apparaîtront à la lumière de la description d'un mode de réalisation, faite ci-après en référence aux dessins annexés dans lesquels :
- La **FIG.1** est une vue en perspective, de dessus, d'une installation de production de récipients ;
- La **FIG.2** est une vue en perspective, de dessous, de l'installation de la **FIG.1** ;
- La **FIG.3** est une vue de dessus de l'installation ;
- Les **FIG.4****,** **FIG.5****,** **FIG.6** sont des vues similaires à la **FIG.3****,** illustrant différentes phases successives d'un arrêt d'urgence, et la **FIG.7** une phase de reprise de la production ; les déplacements des différents convoyeurs y sont illustrés par des flèches en trait gras noir, l'absence de flèche signifiant l'arrêt du convoyeur ;

Sur les dessins est représentée une installation **1** de production de récipients **2** à partir d'ébauches **3** en matière plastique. Selon un mode de réalisation illustré sur les dessins, les ébauches **3** sont des préformes, directement issue d'un moulage par injection. Cependant, dans d'autres modes de réalisation, les ébauches **3** pourraient être des récipients intermédiaires, ayant subi une ou plusieurs opérations préparatoires (comme un présoufflage). La matière est par ex. un polytéréphtalate d'éthylène (PET).

L'installation **1** comprend, en premier lieu, une unité **4** de formage des récipients **2** (par soufflage ou étirage soufflage) à partir des ébauches **3.** Cette unité **4** de formage comprend un convoyeur **5** principal qui définit un trajet **T1** de formage. Dans l'exemple illustré sur les dessins, le convoyeur **5** principal est un carrousel tournant, qui comprend une roue montée en rotation autour d'un axe **X1** principal. Dans cet exemple, le trajet **T1** de formage est circulaire.

L'unité **4** de formage comprend une pluralité de postes **6** de formage portés par le convoyeur **5** principal et incluant chacun un moule **7** à l'empreinte d'un récipient **3.**

Dans l'exemple illustré, chaque moule **7** est monté sur le convoyeur **5** principal ; chaque moule **7** peut adopter :
- Une position ouverte pour permettre l'introduction d'une ébauche **3** et l'évacuation d'un récipient **2** formé, et
- Une position fermée pour permettre le formage d'un récipient **2** à partir d'une ébauche **3.**

Selon un mode de réalisation illustré sur les dessins, chaque moule **7** comprend deux demi-moules articulés autour d'une charnière commune pour être soit écartés l'un de l'autre (dans la position ouverte du moule **7),** soit réunis (dans la position fermée du moule **7).** Chaque moule **7** est équipé d'un mécanisme d'ouverture et de fermeture (par ex. à bielles et came).

Chaque poste **6** de formage comprend en outre un dispositif d'injection, dans chaque ébauche **3** logée dans le moule **7,** d'un fluide sous pression (par ex. de l'air) pour déformer l'ébauche **3** jusqu'à lui conférer l'empreinte du modèle de récipient lorsque la matière se trouve plaquée intérieurement contre le moule **7.**

Selon un mode particulier de réalisation, l'unité **4** de formage est une machine d'étirage soufflage, et chaque poste **6** de formage est équipé d'une tige d'étirage montée en translation par rapport au moule **7** pour étirer l'ébauche **3** en même temps qu'elle est soufflée par injection de fluide.

L'unité **4** de formage comprend une motorisation **M1** principale couplée au convoyeur **5** principal pour déplacer les postes **6** de formage le long du trajet **T1** de formage. Plus précisément, dans l'exemple illustré, les postes **6** de formage sont entraînés dans un mouvement cyclique rotatif.

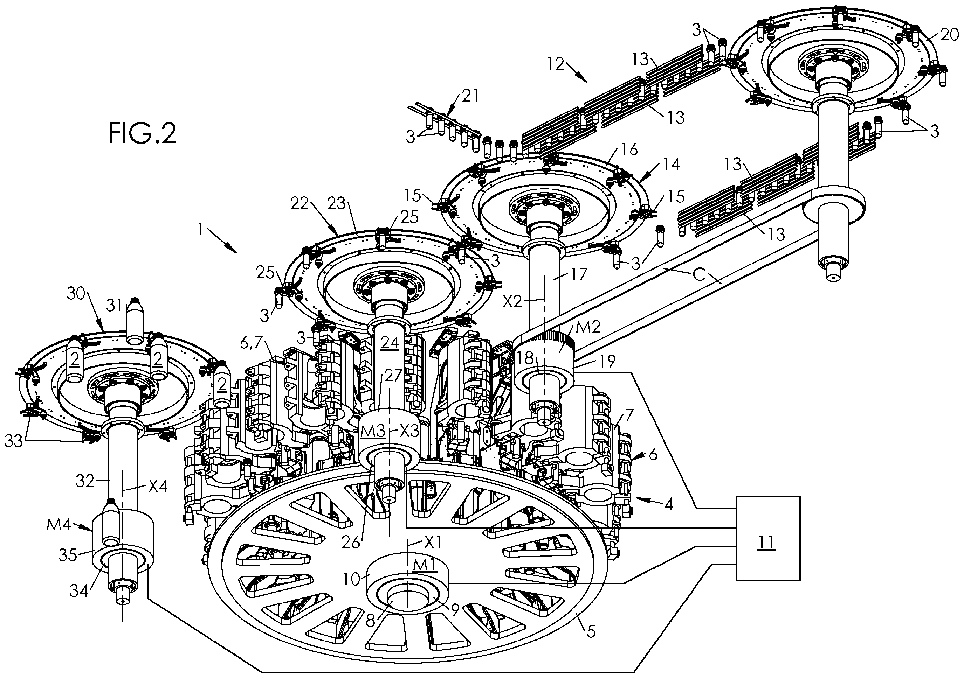

Dans le mode de réalisation illustré sur la **FIG.2****,** le convoyeur 5 principal (sous forme de carrousel) est pourvu d'un arbre **8** principal : c'est à cet arbre **8** principal qu'est couplée la motorisation **M1** principale.

Plus précisément, et selon un mode préféré de réalisation, la motorisation **M1** principale est du type moteur-couple, c'est-à-dire qu'il s'agit d'un servomoteur sans balais à aimants permanents (encore appelé moteur synchrone à aimants permanents, ou encore moteur sans balais à courant continu). Divers modèles sont notamment proposés par la société Etel. Cette motorisation **M1** comprend ainsi un rotor **9** central, directement monté sur l'arbre **8** principal (et solidaire en rotation de celui-ci) et un stator **10** périphérique.

Selon un exemple de réalisation, la motorisation **M1** principale comprend une ou plusieurs bobines solidaire(s) du stator **10,** et une série d'aimants permanents solidaires du rotor **9.** Lorsque la bobine est parcourue par un courant électrique, elle induit dans les aimants permanents une force électromotrice qui anime le rotor **9** d'un mouvement de rotation dont la vitesse est proportionnelle à l'intensité du courant.

L'installation **1** comprend, en deuxième lieu, une unité **11** (électronique ou informatique) de contrôle pilotant la motorisation **M1** principale.

L'unité **11** de contrôle est programmable; elle est reliée à la motorisation **8** principale par une liaison qui peut être filaire ou à radiofréquence.

L'unité **11** de contrôle se présente par ex. sous forme d'un automate programmable industriel (API), pourvu d'une électronique de commande (par ex. un processeur) et une interface homme-machine (typiquement un écran associé à un clavier, ou éventuellement un écran tactile) par laquelle un opérateur peut introduire des instructions ou prendre connaissance d'informations relatives au fonctionnement de l'installation **1.**

Dans le mode de réalisation illustrée, l'unité **11** de contrôle est reliée au stator **10** pour commander l'intensité du courant délivré à la bobine.

L'installation **1** comprend, en troisième lieu, une unité **12** de traitement préalable des ébauches **3.**

L'unité **12** de traitement est équipée de parois **13** rayonnantes devant lesquelles les ébauches **3** sont déplacées pour être exposées au rayonnement.

Selon un mode de réalisation, l'unité **12** de traitement est une unité de conditionnement thermique (c'est-à-dire de chauffe) des ébauches **3,** agencée pour les porter à une température supérieure à la température de transition vitreuse de la matière (laquelle est de 80°C environ pour le PET). Dans ce cas, les parois **13** rayonnantes sont munies de sources de rayonnement infrarouge, typiquement des lampes halogènes.

Selon un autre mode de réalisation, l'unité **12** de traitement est une unité de décontamination par rayonnement ultraviolet. Dans ce cas, les parois **13** rayonnantes sont munies de sources de rayonnement ultraviolet, typiquement des lampes à décharge et vapeur de mercure.

L'unité **1** de traitement comprend un convoyeur **14** secondaire qui définit un trajet **T2** de traitement parcouru (au moins partiellement) par les ébauches **3,** ainsi qu'une pluralité d'organes **15** de préhension des ébauches **3,** portés par le convoyeur **14** secondaire.

Le convoyeur **14** secondaire comprend par ex. une chaîne, et les organes **15** de préhension peuvent se présenter sous forme de dispositifs appelés tournettes, équipés d'un mandrin qui vient s'emmancher dans le col de chaque ébauche **3** pour, lors du parcours du trajet **T2** de traitement, entraîner en rotation l'ébauche **3** pendant son exposition au rayonnement des parois **13.**

Dans l'exemple illustré sur les dessins, une telle chaîne n'est, par souci de clarté, pas représentée. Le trajet **T2** de traitement illustré comprend deux portions droites - chacune bordée de parois **13** rayonnantes en regard l'une de l'autre - reliées entre elles par deux portions courbes. Dans cet exemple, les portions courbes du trajet **T2** de traitement sont définies par des roues pourvues de pinces de préhension des ébauches **3,** ce qui ne correspond pas nécessairement à la réalité matérielle de l'unité **12** de traitement mais a le mérite de schématiser de grossière son architecture.

Ainsi, dans l'exemple illustré, le convoyeur **14** secondaire comprend une roue **16** motrice montée en rotation sur un axe **X2** secondaire, matérialisé par un arbre **17** secondaire. Les organes **15** de préhension illustrés ici sont des pinces réparties à la périphérie de la roue **16** motrice, chacune pourvue d'une paire de mors aptes à venir s'encliqueter sur le col d'une ébauche **3.**

Par ailleurs, l'unité **12** de traitement comprend une motorisation **M2** secondaire, couplée au convoyeur **14** secondaire (ici à la roue secondaire). Cette motorisation **M2** secondaire est indépendante de la motorisation **M1** principale et est pilotée par l'unité **11** de contrôle. A cet effet, l'unité **11** de contrôle est reliée à la motorisation secondaire par une liaison qui peut être filaire ou à radiofréquence.

La motorisation **M2** secondaire est avantageusement du type moteur-couple et comprend un rotor **18** solidaire de l'arbre **17** secondaire et un stator **19** relié à l'unité **11** de contrôle qui en commande l'intensité du courant d'alimentation.

Dans l'exemple illustré, le convoyeur **14** secondaire comprend une roue **20** suiveuse couplée à la roue **16** motrice, par ex. au moyen d'une courroie **C.**

Comme illustré sur les dessins, l'installation **1** comprend un dispositif **21** d'alimentation de l'unité **12** de traitement en ébauches **3.** Ce dispositif **21** d'alimentation comprend par ex. un rail incliné auquel sont suspendues les ébauches **3,** et le long duquel elles coulissent avant d'entrer dans l'unité **12** de traitement.

L'installation **1** comprend, en quatrième lieu, un dispositif **22** auxiliaire de transfert amont des ébauches **3** de l'unité **12** de traitement à l'unité **4** de formage.

Ce dispositif **22** auxiliaire de transfert amont comprend un convoyeur **23** auxiliaire amont qui définit un trajet **T3** de transfert amont. Le trajet **T3** de transfert amont est tangent au trajet **T2** de traitement en un point **PT** de transfert. Le trajet **T3** de transfert est par ailleurs tangent au trajet **T1** de formage en un point **PC** de chargement.

Selon un mode de réalisation illustré sur les dessins, le convoyeur **23** auxiliaire amont se présente sous forme d'une roue, montée en rotation autour d'un axe **X3** auxiliaire, matérialisé par un arbre **24** auxiliaire amont.

Le dispositif **22** auxiliaire de transfert amont comprend en outre une pluralité d'organes **25** de préhension des ébauches, portés par le convoyeur **23** auxiliaire amont. Dans l'exemple illustré, les organes **25** de préhension se présentent sous forme de pinces réparties à la périphérie de la roue, chacune pourvue d'une paire de mors aptes à venir s'encliqueter sur le col d'une ébauche **3.**

Comme illustré notamment sur la **FIG.2****,** le dispositif **22** auxiliaire de transfert amont comprend une motorisation **M3** auxiliaire amont, couplée au convoyeur **23** auxiliaire amont (ici à la roue). Cette motorisation **M3** auxiliaire amont est indépendante de la motorisation **M1** principale et est pilotée par l'unité **11** de contrôle. A cet effet, l'unité **11** de contrôle est reliée à la motorisation **M3** auxiliaire amont par une liaison qui peut être filaire ou à radiofréquence.

La motorisation **M3** auxiliaire amont est avantageusement du type moteur-couple et comprend un rotor **26** solidaire de l'arbre **24** auxiliaire amont, et un stator **27** relié à l'unité **11** de contrôle qui en commande l'intensité du courant d'alimentation.

En fonctionnement normal de l'installation **1,** c'est-à-dire tant qu'aucun défaut n'est détecté dans l'installation **1** (et au moins dans l'unité **12** de traitement), le convoyeur **5** principal, le convoyeur **14** secondaire et le convoyeur **23** auxiliaire amont sont mus par leurs motorisations **M1, M2, M3** respectives, lesquelles, pilotées toutes séparément par l'unité **11** de contrôle, sont néanmoins synchronisées pour permettre :
- Au point **PT** de transfert, le prélèvement, par le convoyeur **23** auxiliaire amont, des ébauches **3** issues du convoyeur **14** secondaire ;
- Au point **PC** de déchargement, la dépose, par le convoyeur **23** auxiliaire de transfert amont, des ébauches **3** dans les moules **7.**

Plus précisément, l'unité **11** de contrôle est programmée pour, tant qu'aucun défaut n'est détecté au moins dans l'unité **12** de traitement, synchroniser :
- La motorisation **M3** auxiliaire amont sur la motorisation **M1** principale, et
- La motorisation **M2** secondaire sur la motorisation **M3** auxiliaire amont.

En d'autres termes, la vitesse de rotation de la motorisation **M3** auxiliaire amont est calée sur la vitesse de rotation de la motorisation **M1** principale (c'est-à-dire que la vitesse de rotation de la motorisation **M3** auxiliaire amont est maintenue à une fraction constante de la vitesse de rotation de la motorisation **M1** principale).

Quant à la vitesse de rotation de la motorisation **M2** secondaire, elle est calée sur la vitesse de rotation de la motorisation **M3** auxiliaire amont.

En revanche, dès lors qu'un défaut est détecté dans l'unité **4** de formage, ces synchronisations ne sont pas maintenues.

Une mise en défaut de l'unité **4** de formage peut être déclarée par ex. lorsqu'un moule présente un coincement à l'ouverture ou à la fermeture. Un tel défaut peut être détecté au moyen de capteurs de positions ou de proximités montés sur les moules **7.**

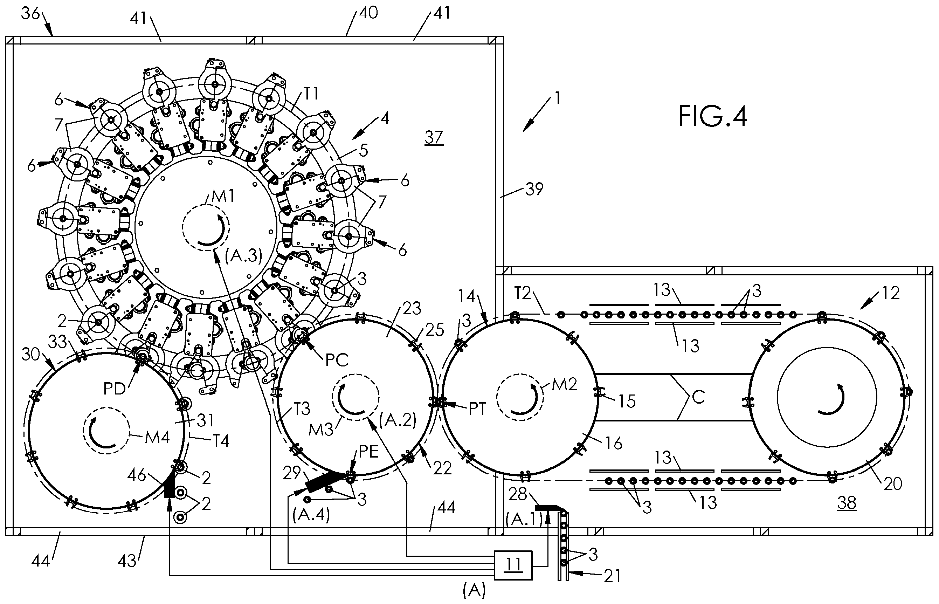

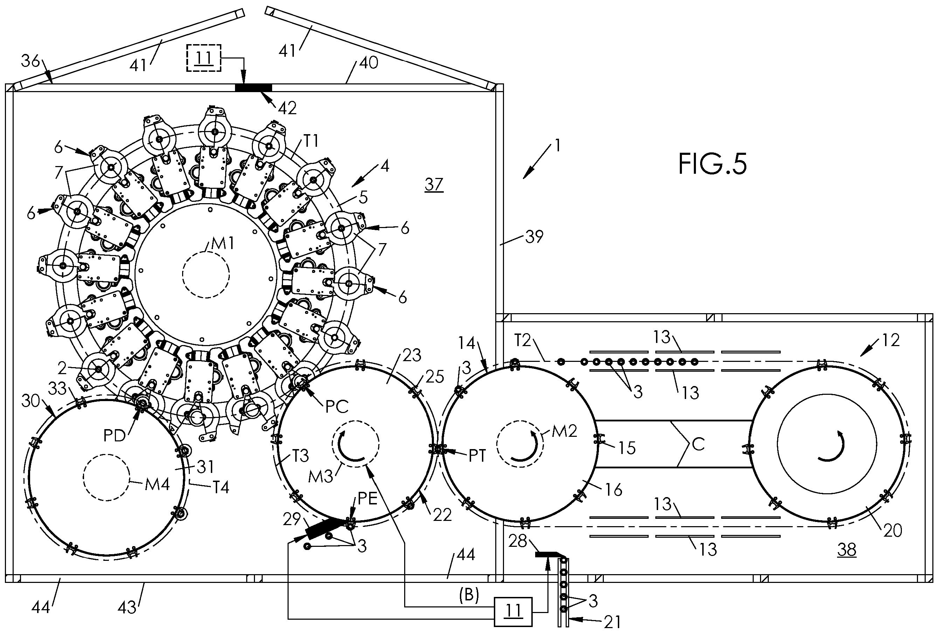

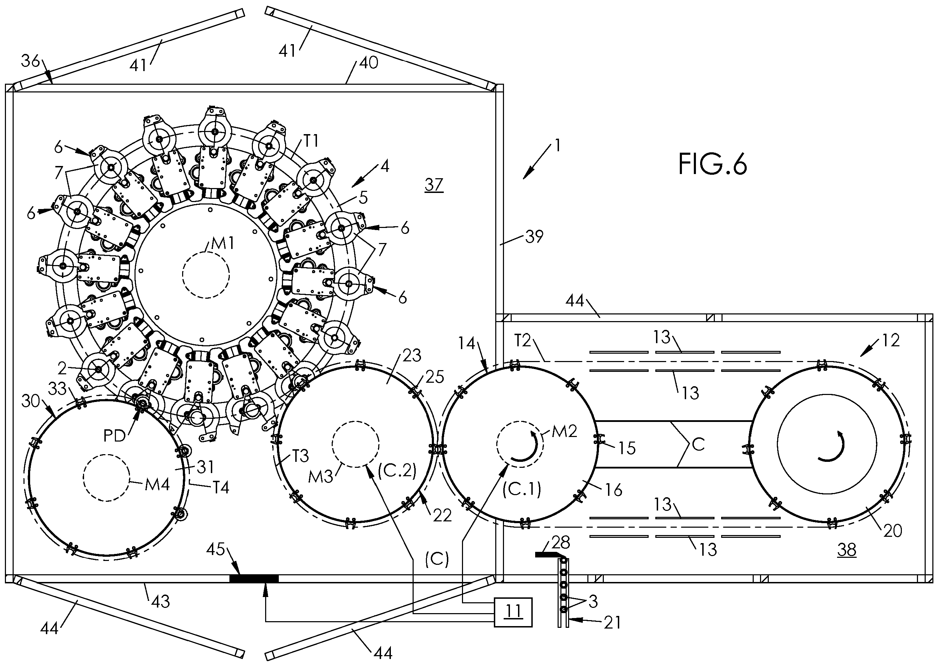

Quelle que soit l'origine du défaut, dans la mesure où il nécessite un arrêt de l'unité **4** de formage, l'unité **11** de contrôle est programmée pour, dès lors que ce défaut est détecté, exécuter une procédure d'arrêt d'urgence de qui comprend plusieurs phases successives, à savoir :
- Une première phase **(A)** de mise à l'arrêt de l'unité **4** de formage **(****FIG.4****,** **FIG.5****)** et d'arrêt de l'alimentation en ébauches **3** de l'unité **12** traitement ;
- Une deuxième phase **(B)** de vidange des ébauches **3** de l'unité **12** de traitement ;
- Une troisième phase **(C)** de mise à l'arrêt du dispositif **22** auxiliaire de transfert amont **(****FIG.6****).**

Ces trois phases **(A), (B), (C)** peuvent se chevaucher dans le temps.

La première phase **(A)** comprend plusieurs étapes.

Une première étape **(A.1)** consiste, pour l'unité **11** de contrôle, (programmée à cet effet), à interrompre l'alimentation en ébauches **3** de l'unité **12** de traitement.

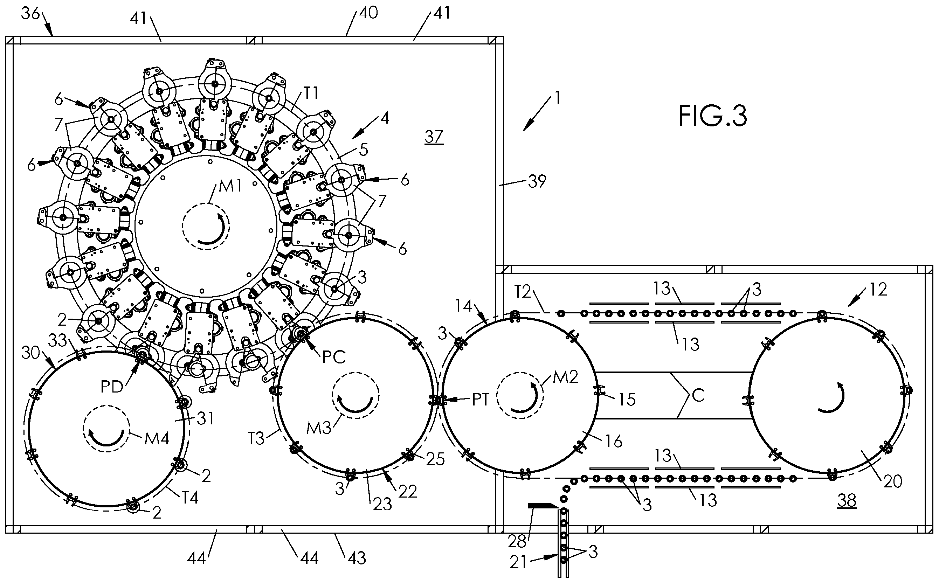

Cette étape est par ex. réalisée par blocage des ébauches **3** au sein (ou immédiatement en aval) du dispositif **21** d'alimentation. Ainsi, dans l'exemple illustré, l'installation **1** comprend un actionneur **28** mobile entre une position rétractée **(****FIG.3****)** dans laquelle l'actionneur **28** est écarté du trajet des ébauches **3** pour permettre leur entrée dans l'unité **12** de traitement, et une position déployée **(****FIG.4****)** dans laquelle l'actionneur **28** fait barrage aux ébauches **3** pour les empêcher d'être introduites dans l'unité **12** de traitement.

Dans ce cas, pour conduire l'étape **(A.1),** l'unité **11** de contrôle commande le passage de l'actionneur **28** de sa position rétractée à sa position déployée.

Une deuxième étape **(A.2)** consiste pour l'unité **11** de contrôle, (programmée à cet effet), à commander la désynchronisation de la motorisation auxiliaire **M3** amont de la motorisation **M1** principale. La vitesse de rotation de la motorisation **M3** auxiliaire (et donc la vitesse de déplacement du convoyeur **23** auxiliaire amont) n'est, dès lors, plus dépendante de la vitesse de rotation de la motorisation **M1** principale.

Cela permet à l'unité **11** de contrôle de piloter le mouvement du convoyeur **23** auxiliaire amont sans interférer avec le mouvement du convoyeur **5** principal.

Une troisième étape **(A.3)** consiste, pour l'unité **11** de contrôle (programmée à cet effet), à commander l'arrêt de la motorisation **M1** principale.

L'arrêt de la motorisation **M1** principale n'est pas immédiat, car le convoyeur 5 principal est affecté d'une importante inertie en raison de sa masse. Concrètement, la commande d'arrêt de la motorisation **M1** principale peut s'effectuer soit par une réduction progressive de la vitesse de rotation de la motorisation **M1** principale, soit par une mise en roue libre de la motorisation **M1** principale, accompagnée d'un freinage de l'arbre **17** secondaire (freinage commandé par l'unité **11** de contrôle). Ce freinage peut être commandé par l'intermédiaire d'un circuit hydraulique.

Pour limiter les pertes, il convient d'interrompre le transfert d'ébauches **3** vers l'unité **4** de formage.

A cet effet, il convient d'éjecter les ébauches **3** avant qu'elles ne parviennent au point **PC** de chargement.

Il est donc prévu, sur le trajet **T3** de transfert, un point **PE** d'éjection situé en amont du point **PC** de chargement (dans le sens de déplacement ordinaire des ébauches **3** le long du trajet **T3** de transfert en fonctionnement normal de l'installation **1).** Ici, le terme « amont » est exclusif, c'est-à-dire que le point **PE** d'éjection ne saurait être confondu avec le point **PC** de chargement.

Concrètement, pour permettre l'éjection des ébauches **3,** l'installation **1** est équipée d'un éjecteur **29** positionné au droit du point **PE** d'éjection, mobile entre une position inactive dans laquelle l'éjecteur **29** est écarté du trajet des préformes **3,** et une position active (représentée sur la **FIG.4****)** dans laquelle l'éjecteur **29** est interposé sur le trajet des préformes **3,** au point **PE** d'éjection, pour les dévier de leur trajectoire et ainsi empêcher leur chargement sur l'unité **4** de formage.

Ainsi, une quatrième étape **(A.4)** de la première phase **(A)** consiste, pour l'unité **11** de contrôle (programmée à cet effet) et tant que la motorisation **M3** auxiliaire amont n'est pas détectée à l'arrêt, à commander l'éjection des ébauches **3** parvenant au point **PE** d'éjection.

Concrètement, pour conduire l'étape **(A.4),** l'unité **11** de contrôle commande le passage de l'éjecteur **29** de sa position inactive à sa position active.

L'éjection des ébauches **3** se poursuit tant que le convoyeur **23** auxiliaire amont n'est pas détecté vide d'ébauches **3.**

La deuxième phase **(B)** consiste, pour l'unité **11** de traitement, à commander le maintien de la synchronisation de la motorisation **M2** secondaire sur la motorisation **M3** auxiliaire amont, et à maintenir l'éjecteur **29** en position déployée.

De la sorte, l'unité **12** de traitement se vide de ses ébauches **3,** puisqu'elles sont éjectées au point **PE** d'éjection, alors même que l'alimentation de l'unité **12** de traitement est stoppée.

Cette vidange se poursuit jusqu'à ce que le dispositif **22** de transfert auxiliaire amont soit détecté vide d'ébauches **3.**

Il est souhaitable d'éviter l'arrêt complet de l'unité **12** de traitement, car son redémarrage, qui s'accompagne d'un long préchauffage des parois **13** rayonnantes, est trop lent. L'unité **12** de traitement continue par conséquent de tourner.

Pour autant, il n'est pas nécessaire de maintenir le mouvement du dispositif **22** de transfert auxiliaire amont, qui peut par conséquent être mis à l'arrêt. Il convient cependant de le découpler de l'unité **12** de traitement, qui demeure en mouvement.

C'est pourquoi la troisième phase **(C)** comprend plusieurs étapes.

Une première étape **(C.1)** consiste, pour l'unité **11** de contrôle (programmée à cet effet), dès lors que l'unité **12** de traitement est détectée vide d'ébauches **3,** à commander la désynchronisation de la motorisation **M2** secondaire de la motorisation **M3** auxiliaire **(****FIG.5****).**

Une deuxième étape **(C.2)** consiste, pour l'unité **11** de contrôle (programmée à cet effet), dès lors que le dispositif **22** auxiliaire de transfert amont est détecté vide d'ébauches **3,** à commander l'arrêt de la motorisation **M3** auxiliaire **(****FIG.6****).**

Pour maintenir en mouvement l'unité **12** de traitement, l'unité **11** de contrôle est programmée pour maintenir en mouvement la motorisation **M2** secondaire de manière désynchronisée de la motorisation **M3** auxiliaire. Les parois **13** rayonnante peuvent être maintenues sous tension, même s'il est préférable d'en diminuer la puissance pour minimiser la consommation d'énergie. Le maintien sous tension des parois **13** permet d'éviter leur préchauffe au redémarrage.

On notera que, selon un mode particulier de réalisation illustré sur les dessins, l'installation **1** comprend un dispositif **30** auxiliaire de transfert aval des récipients **2** formés depuis l'unité **4** de formage vers une (ou plusieurs) autre(s) machine(s), agencée pour effectuer des opérations complémentaires sur les récipients **2** (typiquement remplissage, bouchage, étiquetage).

Ce dispositif **30** auxiliaire de transfert aval comprend un convoyeur **31** auxiliaire aval qui définit un trajet **T4** de transfert aval. Le trajet **T4** de transfert aval est tangent au trajet **T1** de formage en un point **PD** de déchargement.

Selon un mode de réalisation illustré sur les dessins, le dispositif **30** auxiliaire de transfert aval se présente sous forme d'une roue, montée en rotation autour d'un axe **X4** auxiliaire aval, matérialisé par un arbre **32** auxiliaire aval.

Le dispositif **30** auxiliaire de transfert aval comprend en outre une pluralité d'organes **33** de préhension des récipients **2,** portés par le convoyeur **31** auxiliaire aval. Dans l'exemple illustré, les organes **33** de préhension se présentent sous forme de pinces réparties à la périphérie de la roue, chacune pourvue d'une paire de mors aptes à venir s'encliqueter sur le col d'un récipient **2.**

Comme illustré notamment sur la **FIG.2****,** le dispositif **30** auxiliaire de transfert aval comprend une motorisation **M4** auxiliaire aval, couplée au convoyeur **31** auxiliaire aval (ici à la roue). Cette motorisation **M4** auxiliaire aval est indépendante de la motorisation **M1** principale et est pilotée par l'unité **11** de contrôle. A cet effet, l'unité **11** de contrôle est reliée à la motorisation **M4** auxiliaire aval par une liaison qui peut être filaire ou à radiofréquence.

La motorisation **M4** auxiliaire aval est avantageusement du type moteur-couple et comprend un rotor **34** solidaire de l'arbre **32** auxiliaire aval, et un stator **35** relié à l'unité **11** de contrôle qui en commande l'intensité du courant d'alimentation.

En fonctionnement normal de l'installation **1,** c'est-à-dire tant qu'aucun défaut n'est détecté dans l'installation **1,** le convoyeur **31** auxiliaire aval est mu par sa motorisation **M4** auxiliaire aval, laquelle est synchronisée sur la motorisation **M1** principale pour permettre, au point **PD** de déchargement, le prélèvement par le convoyeur **31** auxiliaire aval, dans chaque moule **7** ouvert, des récipients **2** formés dans l'unité **4** de formage.

En d'autres termes, la vitesse de rotation de la motorisation **M4** auxiliaire aval est calée sur la vitesse de rotation de la motorisation **M1** principale (c'est-à-dire que la vitesse de rotation de la motorisation **M4** auxiliaire aval est maintenue à une fraction constante de la vitesse de rotation de la motorisation **M1** principale).

L'unité **11** de contrôle maintient en toute circonstance cette synchronisation de la motorisation **M4** auxiliaire aval sur la motorisation **M1** principale.

L'arrêt d'urgence de l'unité **4** de formage est destiné à permettre la conduite sur celle-ci d'une opération de maintenance. L'accès à la zone dans laquelle doit être conduite cette opération doit, à cet effet, être autorisé.

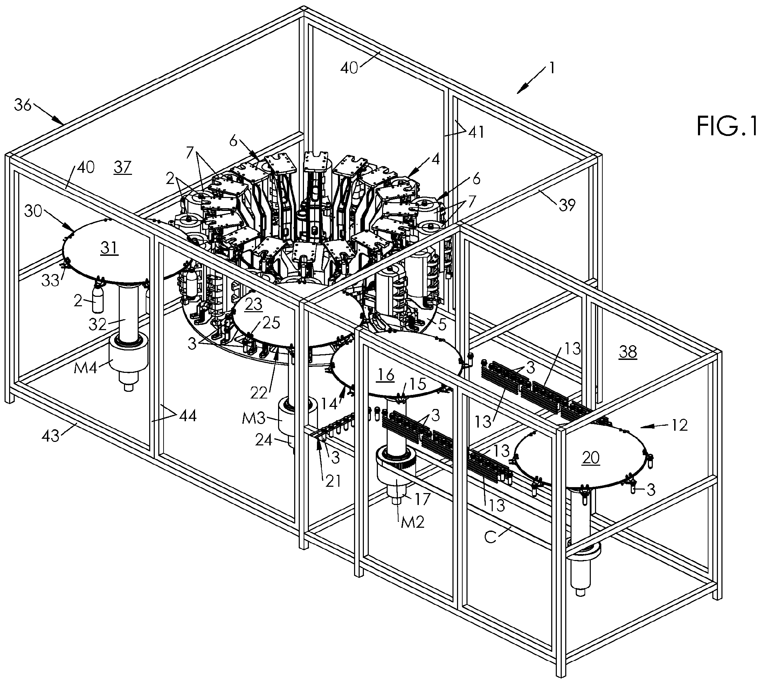

Dans l'exemple illustré sur la **FIG.1** et sur les **FIG.3** à **FIG.7****,** l'installation **1** comprend un capotage **36** définissant une enceinte **37** principale dans laquelle est logée l'unité **4** de formage (et, éventuellement, le(s) dispositif(s) **22, 30** auxiliaire(s) de transfert).

Selon un mode particulier de réalisation, le capotage **36** définit également une enceinte **38** secondaire, séparée de l'enceinte **37** principale, et dans laquelle est au moins partiellement logée l'unité **12** de traitement.

Plus précisément, ce capotage **36** comprend :
- Un châssis **39** définissant au moins un dormant **40** principal qui borde l'enceinte **37** principale du côté de l'unité **4** de formage ;
- Au moins un ouvrant **41** principal (en pratique une porte) monté sur le dormant **40** principal entre :
   - Une position ouverte dans laquelle l'ouvrant **41** principal est écarté du dormant **40** principal pour donner accès à l'enceinte **37** principale par l'extérieur, et
   - Une position fermée dans laquelle l'ouvrant **41** principal est logé dans le dormant **40** principal pour interdire l'accès à l'enceinte **37** principale par l'extérieur ;
- Un système **42** de verrouillage et déverrouillage de l'ouvrant **41** principal en position fermée, relié à (et piloté par) l'unité **11** de contrôle.

Selon un mode de réalisation illustré notamment sur la **FIG.6****,** le capotage **36** comprend en outre :
- Un dormant **43** auxiliaire qui borde l'enceinte **37** principale du côté des dispositifs **22, 30** de transfert auxiliaire ;
- Au moins un ouvrant **44** auxiliaire (en pratique une porte) monté sur le dormant **43** auxiliaire entre :
   - Une position ouverte dans laquelle l'ouvrant **44** auxiliaire est écarté du dormant **43** auxiliaire pour donner accès à l'enceinte **37** principale par l'extérieur du côté des dispositifs **22, 30** de transfert auxiliaire, et
   - Une position fermée dans laquelle l'ouvrant **44** auxiliaire est logé dans le dormant **43** auxiliaire pour interdire l'accès à l'enceinte **37** principale par l'extérieur, du côté des dispositifs **22, 30** de transfert auxiliaire ;
- Un système **45** de verrouillage et déverrouillage de l'ouvrant **44** auxiliaire en position fermée, relié à (et piloté par) l'unité **11** de contrôle.

Comme le capotage **36** définit deux enceintes **37, 38** distinctes qui permettent un accès séparé, d'une part, à l'unité **4** de formage et, d'autre part, à l'unité **12** de traitement, il n'est pas nécessaire que l'unité **12** de traitement soit à l'arrêt pour autoriser l'accès à l'enceinte **37** principale.

En revanche, il est plus sûr d'interdire l'accès à l'enceinte **37** principale du côté des dispositifs **22, 30** de transfert auxiliaire tant que ceux-ci ne sont pas arrêtés.

Ainsi, l'unité **11** de contrôle peut être programmée pour, dès lors que la motorisation **M1** principale est détectée à l'arrêt, commander le déverrouillage de l'ouvrant **41** principal, comme illustré sur la **FIG.5****,** où l'on voit que l'ouvrant **41** principal est ouvert, alors même que l'unité **12** de traitement continue de tourner.

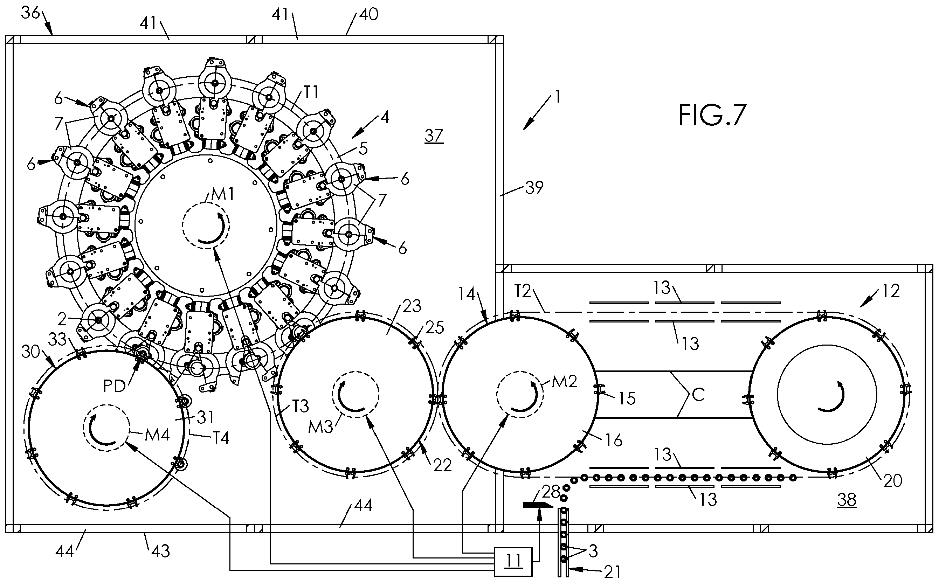

Comme il peut être nécessaire d'intervenir ensuite sur les dispositifs **22, 30** de transfert auxiliaire, l'unité **11** de contrôle peut, en outre, être programmée pour, dès lors que la motorisation **M3** auxiliaire amont est détectée à l'arrêt, commander le déverrouillage de l'ouvrant **44** secondaire, comme illustré sur la **FIG.7****,** où l'on voit que l'ouvrant **41** principal (ou plusieurs ouvrants **41** principaux) est (sont) ouvert(s).

Il résulte de l'architecture qui vient d'être décrite que, grâce à la mise à l'arrêt de l'unité **4** de formage indépendamment de l'unité **12** de traitement, qui peut continuer de tourner, le redémarrage de l'installation **1** après la correction du défaut, est rapide. Il n'est pas nécessaire de vidanger l'unité **12** de traitement, puisque cette vidange a déjà eu lieu pendant la phase d'arrêt de l'unité **4** de formage. Comme les parois **13** rayonnantes ont été maintenues sous tension, il n'est pas nécessaire de les préchauffer. Il en résulte une productivité accrue.

On notera qu'il peut être préférable d'éjecter les récipients **2** sortant de l'unité **4** de formage pendant l'arrêt de celle-ci. Aussi, dans l'exemple illustré sur la **FIG.4****,** l'installation comprend un éjecteur **46** positionné sur le trajet **T4** de transfert aval, de sorte à minimiser le risque que des récipients **2** poursuivent leur périple dans l'installation **1.**

L'éjecteur **46** est relié à l'unité **11** de contrôle, qui en pilote le fonctionnement. Ainsi, pendant la phase **(A),** il est prévu une étape **(A.5)** qui consiste, pour l'unité **11** de contrôle, à commander le déplacement de l'éjecteur **46** vers une position déployée (illustrée sur la **FIG.4****)** dans laquelle il obstrue le passage des récipients **2** sur le trajet **T4** de transfert aval, de sorte à les en dévier.

Le redémarrage de la production est piloté par l'unité **11** de contrôle **(****FIG.7****).** Celle-ci est en effet programmée pour, dès lors que l'unité **4** de formage est détectée comme opérationnelle (c'est-à-dire que l'unité **4** de formage est décrétée sans défaut, ou le défaut a été indiqué manuellement comme étant corrigé) :
∘ Redémarrer la motorisation **M1** principale ;
∘ Redémarrer la motorisation **M3** auxiliaire si elle est détectée à l'arrêt ;
∘ Resynchroniser la motorisation **M3** auxiliaire sur la motorisation **M1** principale ;
∘ Débloquer l'alimentation en ébauches **3** de l'unité **12** de traitement.

Comme l'unité **4** de formage, l'unité **12** de traitement et le dispositif **22** auxiliaire de transfert amont ont des inerties différentes, les motorisations **M1, M2, M3** ne peuvent être synchronisées immédiatement : il convient de les mettre progressivement en rotation, puis de faire converger (sur commande de l'unité **11** de contrôle) chaque vitesse vers la vitesse nominale correspondant au fonctionnement à plein régime.

## Revendications

1. Installation **(1)** de production de récipients **(2)** à partir d'ébauches **(3)** en matière plastique, qui comprend :
- Une unité **(4)** de formage des récipients **(2)** à partir des ébauches **(3),** qui comprend :
• Un convoyeur **(5)** principal définissant un trajet **(T1)** de formage ;
• Une pluralité de postes **(6)** de formage portés par le convoyeur **(5)** principal et incluant chacun un moule **(7)** à l'empreinte d'un récipient **(2)** ;
• Une motorisation **(M1)** principale couplée au convoyeur **(5)** principal pour déplacer les postes **(6)** de formage le long du trajet (**T1**) de formage ;
- Une unité **(12)** de traitement préalable des ébauches **(3),** qui comprend :
• Un convoyeur **(14)** secondaire définissant un trajet **(T2)** de traitement ;
• Une pluralité d'organes **(15)** de préhension des ébauches **(3),** portés par le convoyeur **(14)** secondaire ;
- Un dispositif **(22)** auxiliaire de transfert des ébauches **(3)** de l'unité **(12)** de traitement à l'unité **(4)** de formage, qui comprend :
• Un convoyeur **(23)** auxiliaire définissant un trajet **(T3)** de transfert tangent au trajet **(T2)** de traitement en un point **(PT)** de transfert, et au trajet de formage en un point **(PC)** de chargement ;
• Une pluralité d'organes **(25)** de préhension des ébauches **(3),** portés par le convoyeur **(23)** auxiliaire ;
- Une unité **(11)** de contrôle pilotant la motorisation **(M1)** principale ;
- L'unité **(12)** de traitement des ébauches comprend une motorisation **(M2)** secondaire couplée au convoyeur **(14)** secondaire, indépendante de la motorisation **(M1)** principale et pilotée par l'unité **(11)** de contrôle ;
- Le dispositif **(22)** auxiliaire de transfert comprend une motorisation **(M3)** auxiliaire couplée au convoyeur **(23)** auxiliaire, indépendante de la motorisation **(M1)** principale et pilotée par l'unité **(11)** de contrôle ;
- L'unité **(11)** de contrôle est programmée pour :
Tant qu'aucun défaut n'est détecté au moins dans l'unité **(4)** de formage, synchroniser la motorisation **(M3)** auxiliaire sur la motorisation **(M1)** principale, et la motorisation **(M2)** secondaire sur la motorisation **(M3)** auxiliaire ;
- Cette installation **(1)** étant **caractérisé en ce que** l'unité **(11)** de contrôle est également programmée pour :
Dès lors qu'un défaut est détecté dans l'unité **(4)** de formage :
(A.**1)** Interrompre l'alimentation en ébauches **(3)** de l'unité **(12)** de traitement ;
(A.**2)** Commander la désynchronisation de la motorisation **(M3)** auxiliaire de la motorisation **(M1)** principale ;
(A.**3)** Commander l'arrêt de la motorisation **(M1)** principale.

2. Installation **(1)** selon la revendication 1, **caractérisée en ce que** l'unité **(11)** de contrôle est programmée en outre, pour, dès lors qu'un défaut est détecté dans l'unité **(4)** de formage :
**(A.4)** Commander l'éjection des ébauches **(3)** parvenant à un point **(PE)** d'éjection situé en amont du point **(PC)** de chargement.

3. Installation **(1)** selon la revendication 1 ou la revendication 2, **caractérisée en ce que** l'unité **(11)** de contrôle est programmée pour, dès lors que l'unité **(12)** de traitement est détectée vide d'ébauches **(3),** commander la désynchronisation de la motorisation **(M2)** secondaire de la motorisation **(M3)** auxiliaire.

4. Installation (1) selon la revendication 3, **caractérisée en ce que** l'unité **(12)** de traitement est programmée pour, dès lors que le dispositif **(22)** auxiliaire de transfert est détecté vide d'ébauches **(3),** commander l'arrêt de la motorisation **(M3)** auxiliaire.

5. Installation **(1)** selon la revendication 3 ou la revendication 4, **caractérisée en ce que** l'unité **(12)** de traitement est programmée pour maintenir en mouvement la motorisation **(M2)** secondaire de manière désynchronisée de la motorisation **(M3)** auxiliaire.

6. Installation **(1)** selon l'une des revendications précédentes, **caractérisée en ce que** chaque motorisation **(M1, M2, M3)** est un moteur-couple.

7. Installation **(1)** selon l'une des revendications précédentes, **caractérisée en ce qu'**elle comprend un capotage **(36)** définissant une enceinte **(37)** principale dans laquelle est logée l'unité **(4)** de formage, et une enceinte **(38)** secondaire séparée de l'enceinte **(37)** principale et dans laquelle est au moins partiellement logée l'unité **(12)** de traitement, ce capotage **(36)** comprenant :
- Un châssis **(39)** définissant au moins un dormant **(40)** principal qui borde l'enceinte **(37)** principale ;
- Au moins un ouvrant **(41)** principal monté sur le dormant **(40)** principal entre une position ouverte dans laquelle l'ouvrant **(41)** principal est écarté du dormant **(40)** principal pour donner accès à l'enceinte **(37)** principale par l'extérieur, et une position fermée dans laquelle l'ouvrant **(41)** principal est logé dans le dormant **(40)** principal pour interdire l'accès à l'enceinte **(37)** principale par l'extérieur ;
- Un système **(42)** de verrouillage et déverrouillage de l'ouvrant **(41)** principal en position fermée, relié à l'unité **(11)** de contrôle ;

8. Installation **(1)** selon la revendication 7, **caractérisée en ce que** l'unité **(11)** de contrôle est programmée pour, dès lors que la motorisation **(M1)** principale est détectée à l'arrêt, commander le déverrouillage de l'ouvrant (**41**) principal.

9. Installation **(1)** selon l'une des revendications précédentes, **caractérisée en ce que** l'unité (**11**) de contrôle est programmée pour, dès lors que l'unité **(4)** de formage est détectée comme opérationnelle,
∘ Redémarrer la motorisation **(M1)** principale ;
∘ Redémarrer la motorisation **(M3)** auxiliaire si elle est détectée à l'arrêt ;
∘ Resynchroniser la motorisation **(M3)** auxiliaire sur la motorisation **(M1)** principale ;
∘ Débloquer l'alimentation en ébauches **(3)** de l'unité **(12)** de traitement.

10. Procédé de pilotage d'une installation **(1)** de production de récipients selon l'une des revendications précédentes, qui comprend les opérations, commandées par l'unité **(11)** de contrôle, consistant à :
∘ Tant qu'aucun défaut n'est détecté au moins dans l'unité **(4)** de formage, synchroniser la motorisation **(M3)** auxiliaire sur la motorisation (**M1**) principale, et la motorisation **(M2)** secondaire sur la motorisation **(M3)** auxiliaire ;
∘ Dès lors qu'un défaut est détecté dans l'unité **(4)** de formage :
(A.**1)** Interrompre l'alimentation en ébauches **(3)** de l'unité **(12)** de traitement ;
(A.**2)** Commander la désynchronisation de la motorisation **(M3)** auxiliaire de la motorisation **(M1)** principale ;
(A.**3)** Commander l'arrêt de la motorisation **(M1)** principale ;

11. Procédé selon la revendication 10, qui comprend, dès lors qu'un défaut est détecté dans l'unité **(4)** de formage, l'opération consistant à :
**(A.4)** Commander l'éjection des ébauches **(3)** parvenant à un point **(PE)** d'éjection situé en amont du point **(PC)** de chargement.

12. Procédé selon la revendication 10 ou la revendication 11, qui comprend les opérations, commandées par l'unité **(11)** de contrôle, consistant, dès lors que l'unité **(4)** de formage est détectée comme opérationnelle, à :
∘ Redémarrer la motorisation **(M1)** principale ;
∘ Redémarrer la motorisation **(M3)** auxiliaire si elle est détectée à l'arrêt ;
∘ Resynchroniser la motorisation **(M3)** auxiliaire sur la motorisation **(M1)** principale ;
∘ Débloquer l'alimentation en ébauches **(3)** de l'unité **(12)** de traitement.

## Patentansprüche

1. Anlage (1) zur Herstellung von Behältern (2) aus Kunststoffrohlingen (3), umfassend:
- eine Einheit (4) zum Formen der Behälter (2) aus den Rohlingen (3), umfassend:
• einen Hauptförderer (5), der eine Formgebungsbahn (T1) definiert;
• mehrere Formgebungsstationen (6), die vom Hauptförderer (5) getragen werden und jeweils eine Form (7) mit dem Abdruck eines Behälters (2) beinhalten;
• einen mit dem Hauptförderer (5) gekoppelten Hauptantrieb (M1) zum Bewegen der Formgebungsstationen (6) entlang der Formgebungsbahn (T1);
- eine Einheit (12) zur vorherigen Aufbereitung der Rohlinge (3), umfassend:
• einen Nebenförderer (14), der eine Aufbereitungsbahn (T2) definiert;
• mehrere Organe (15) zum Greifen der Rohlinge (3), die durch den Nebenförderer (14) getragen werden;
- eine Hilfsvorrichtung (22) für den Transfer der Rohlinge (3) von der Aufbereitungseinheit (12) zur Formgebungseinheit (4), umfassend:
• einen Hilfsförderer (23), der eine Transferbahn (T3) definiert, die die Aufbereitungsbahn (T2) an einem Transferpunkt (PT) und die Formgebungsbahn an einem Ladepunkt (PC) tangiert;
• mehrere Organe (25) zum Greifen der Rohlinge (3), die durch den Hilfsförderer (23) getragen werden;
- eine Steuereinheit (11), die den Hauptantrieb (M1) steuert;
- wobei die Einheit (12) zur Aufbereitung der Rohlinge einen Nebenantrieb (M2) umfasst, der mit dem Nebenförderer (14) gekoppelt ist, vom Hauptantrieb (M1) unabhängig ist und durch die Steuereinheit (11) gesteuert wird;
- wobei die Transferhilfsvorrichtung (22) einen Hilfsantrieb (M3) umfasst, der mit dem Hilfsförderer (23) gekoppelt ist, vom Hauptantrieb (M1) unabhängig ist und durch die Steuereinheit (11) gesteuert wird;
- wobei die Steuereinheit (11) dazu programmiert ist: solange zumindest in der Formgebungseinheit (4) kein Fehler erkannt wird, den Hilfsantrieb (M3) mit dem Hauptantrieb (M1) zu synchronisieren und den Nebenantrieb (M2) mit dem Hilfsantrieb (M3) zu synchronisieren;
- wobei diese Anlage (1) **dadurch gekennzeichnet ist, dass** die Steuereinheit (11) ferner dazu programmiert ist: sobald in der Formgebungseinheit (4) ein Fehler erkannt wird:
(A.1) die Zufuhr von Rohlingen (3) zur Aufbereitungseinheit (12) zu unterbrechen;
(A.2) die Desynchronisierung des Hilfsantriebs (M3) vom Hauptantrieb (M1) zu steuern;
(A.3) das Stoppen des Hauptantriebs (M1) zu steuern.

2. Anlage (1) nach Anspruch 1, **dadurch gekennzeichnet, dass** die Steuereinheit (11) ferner dazu programmiert ist, sobald ein Fehler in der Formgebungseinheit (4) detektiert wird:
(A.4) den Auswurf der Rohlinge (3), die an einem stromaufwärts des Ladepunkts (PC) befindlichen Auswurfpunkt (PE) ankommen, zu steuern.

3. Anlage (1) nach Anspruch 1 oder Anspruch 2, **dadurch gekennzeichnet, dass** die Steuereinheit (11) dazu programmiert ist, sobald festgestellt wird, dass die Aufbereitungseinheit (12) leer von Rohlingen (3) ist, die Desynchronisierung des Nebenantriebs (M2) vom Hilfsantrieb (M3) zu steuern.

4. Anlage (1) nach Anspruch 3, **dadurch gekennzeichnet, dass** die Aufbereitungseinheit (12) dazu programmiert ist, sobald festgestellt wird, dass die Transferhilfsvorrichtung (22) leer von Rohlingen (3) ist, das Stoppen des Hilfsantriebs (M3) zu steuern.

5. Anlage (1) nach Anspruch 3 oder Anspruch 4, **dadurch gekennzeichnet, dass** die Aufbereitungseinheit (12) dazu programmiert ist, den Nebenantrieb (M2) desynchronisiert zum Hilfsantrieb (M3) in Bewegung zu halten.

6. Anlage (1) nach einem der vorangehenden Ansprüche, **dadurch gekennzeichnet, dass** jeder Antrieb (M1, M2, M3) ein Drehmomentmotor ist.

7. Anlage (1) nach einem der vorangehenden Ansprüche, **dadurch gekennzeichnet, dass** sie eine Verkleidung (36) umfasst, die eine Hauptkammer (37), in der die Formgebungseinheit (4) angeordnet ist, und eine von der Hauptkammer (37) getrennte Nebenkammer (38), in der zumindest teilweise die Aufbereitungseinheit (12) angeordnet ist, definiert, wobei die Verkleidung (36) Folgendes umfasst:
- einen Rahmen (39), der zumindest eine Hauptzarge (40) definiert, die die Hauptkammer (37) einfasst;
- zumindest einen Hauptflügel (41), der an der Hauptzarge (40) zwischen einer offenen Position, in der der Hauptflügel (41) von der Hauptzarge (40) beabstandet ist, um den Zugang zur Hauptkammer (37) von außen zu gewähren, und einer geschlossenen Position, in der der Hauptflügel (41) in der Hauptzarge (40) angeordnet ist, um den Zugang zur Hauptkammer (37) von außen zu verhindern, montiert ist;
- ein System (42) zum Verriegeln und Entriegeln des Hauptflügels (41) in der geschlossenen Position, das mit der Steuereinheit (11) verbunden ist.

8. Anlage (1) nach Anspruch 7, **dadurch gekennzeichnet, dass** die Steuereinheit (11) dazu programmiert ist, sobald festgestellt wird, dass der Hauptantrieb (M1) gestoppt ist, die Entriegelung des Hauptflügels (41) zu steuern.

9. Anlage (1) nach einem der vorangehenden Ansprüche, **dadurch gekennzeichnet, dass** die Steuereinheit (11) dazu programmiert ist, sobald festgestellt wird, dass die Formgebungseinheit (4) betriebsbereit ist,
∘ den Hauptantrieb (M1) neu zu starten;
∘ den Hilfsantrieb (M3) neu zu starten, wenn festgestellt wird, dass er gestoppt ist;
∘ den Hilfsantrieb (M3) wieder mit dem Hauptantrieb (M1) zu synchronisieren;
∘ die Versorgung der Aufbereitungseinheit (12) mit Rohlingen (3) zu entsperren.

10. Verfahren zum Steuern einer Anlage (1) zur Herstellung von Behältern nach einem der vorangehenden Ansprüche, umfassend die folgenden, durch die Steuereinheit (11) gesteuerten Vorgänge:
o solange zumindest in der Formgebungseinheit (4) kein Fehler erkannt wird, den Hilfsantrieb (M3) mit dem Hauptantrieb (M1) zu synchronisieren und den Nebenantrieb (M2) mit dem Hilfsantrieb (M3) zu synchronisieren;
o sobald in der Formgebungseinheit (4) ein Fehler erkannt wird:
(A.1) die Zufuhr von Rohlingen (3) zur Aufbereitungseinheit (12) zu unterbrechen;
(A.2) die Desynchronisierung des Hilfsantriebs (M3) vom Hauptantrieb (M1) zu steuern;
(A.3) das Stoppen des Hauptantriebs (M1) zu steuern.

11. Verfahren nach Anspruch 10, umfassend, sobald in der Formgebungseinheit (4) ein Fehler detektiert wird, den Vorgang, der darin besteht:
(A.4) den Auswurf der Rohlinge (3), die an einem stromaufwärts des Ladepunkts (PC) befindlichen Auswurfpunkt (PE) ankommen, zu steuern.

12. Verfahren nach Anspruch 10 oder Anspruch 11, umfassend die durch die Steuereinheit (11) gesteuerten Vorgänge, die darin bestehen, sobald festgestellt wurde, dass die Formgebungseinheit (4) betriebsbereit ist:
o den Hauptantrieb (M1) neu zu starten;
o den Hilfsantrieb (M3) neu zu starten, wenn festgestellt wird, dass er gestoppt ist;
o den Hilfsantrieb (M3) wieder mit dem Hauptantrieb (M1) zu synchronisieren;
o die Versorgung der Aufbereitungseinheit (12) Rohlingen (3) zu entsperren.

## Claims

1. Installation **(1)** for producing containers **(2)** from blanks **(3)** made of plastics material, which comprises:
- a unit **(4)** for forming containers **(2)** from blanks **(3),** which comprises:
• a main conveyor **(5)** defining a forming path (**T1**) ;
• a plurality of forming stations **(6)** borne by the main conveyor **(5)** and each including a mould **(7)** with the imprint of a container **(2);**
• a main drive means (**M1**) coupled to the main conveyor **(5)** for moving the forming stations **(6)** along the forming path (**T1**);
- a unit **(12)** for prior treatment of the blanks **(3),** which comprises:
• a secondary conveyor **(14)** defining a treatment path **(T2);**
• a plurality of members **(15)** for gripping the blanks **(3),** borne by the secondary conveyor (**14**);
- an auxiliary device **(22)** for transferring the blanks **(3)** from the treatment unit **(12)** to the forming unit **(4),** which comprises:
• an auxiliary conveyor **(23)** defining a transfer path **(T3)** tangential to the treatment path **(T2)** at a transfer point (**PT**), and to the forming path at a loading point **(PC);**
• a plurality of members **(25)** for gripping the blanks **(3),** borne by the auxiliary conveyor **(23)** ;
- a control unit **(11)** controlling the main drive means (**M1**) ;
- the unit **(12)** for treatment of the blanks comprises a secondary drive means **(M2)** coupled to the secondary conveyor **(14),** independent of the main drive means (**M1**) and controlled by the control unit (**11**);
- the auxiliary transfer device **(22)** comprises an auxiliary drive means **(M3)** coupled to the auxiliary conveyor **(23),** independent of the main drive means (**M1**) and controlled by the control unit **(11);**
- the control unit **(11)** is programmed to:
as long as no fault is detected at least in the forming unit **(4),** synchronize the auxiliary drive means **(M3)** with the main drive means (**M1**), and the secondary drive means **(M2)** with the auxiliary drive means **(M3);**
- this installation **(1)** being **characterized in that** the control unit **(11)** is also programmed to:
as soon as a fault is detected in the forming unit **(4)** :
(A.**1)** interrupt the supply of blanks **(3)** to the treatment unit **(12);**
(A.**2)** command the desynchronization of the auxiliary drive means **(M3)** from the main drive means (**M1**);
(A.**3)** command the stopping of the main drive means (**M1**).

2. Installation **(1)** according to Claim 1, **characterized in that** the control unit **(11)** is also programmed to, as soon as a fault is detected in the forming unit **(4):**
**(A.4)** command the ejection of the blanks **(3)** that arrive at an ejection point **(PE)** situated upstream of the loading point **(PC).**

3. Installation **(1)** according to Claim 1 or Claim 2, **characterized in that** the control unit **(11)** is programmed to, as soon as it is detected that the treatment unit **(12)** is empty of blanks **(3),** command the desynchronization of the secondary drive means **(M2)** from the auxiliary drive means **(M3).**

4. Installation **(1)** according to Claim 3, **characterized in that** the treatment unit **(12)** is programmed to, as soon as it is detected that the auxiliary transfer device **(22)** is empty of blanks **(3),** command the stopping of the auxiliary drive means **(M3).**

5. Installation **(1)** according to Claim 3 or Claim 4, **characterized in that** the treatment unit **(12)** is programmed to keep the secondary drive means **(M2)** moving in a manner desynchronized from the auxiliary drive means **(M3)** .

6. Installation **(1)** according to one of the preceding claims, **characterized in that** each drive means (**M1**, **M2**, **M3**) is a torque motor.

7. Installation **(1)** according to one of the preceding claims, **characterized in that** it comprises a cowling **(36)** defining a main chamber **(37)** in which the forming unit **(4)** is housed, and a secondary chamber **(38)** that is separate from the main chamber **(37)** and in which the treatment unit **(12)** is at least partially housed, this cowling **(36)** comprising:
- a chassis **(39)** defining at least one main frame **(40)** that borders the main chamber **(37);**
- at least one main leaf **(41)** mounted on the main frame **(40)** between an open position in which the main leaf **(41)** is spaced apart from the main frame **(40)** so as to provide access to the main chamber **(37)** from the outside, and a closed position in which the main leaf **(41)** is housed in the main frame **(40)** so as to prevent access to the main chamber **(37)** from the outside;
- a system (**42**) for locking and unlocking the main leaf **(41)** in the closed position, connected to the control unit **(11).**

8. Installation **(1)** according to Claim 7, **characterized in that** the control unit **(11)** is programmed to, as soon as it is detected that the main drive means (**M1**) has stopped, command the unlocking of the main leaf **(41).**

9. Installation **(1)** according to one of the preceding claims, **characterized in that** the control unit **(11)** is programmed to, as soon as it is detected that the forming unit **(4)** is operational,
o restart the main drive means (**M1**);
o restart the auxiliary drive means **(M3)** if it is detected that it has stopped;
o resynchronize the auxiliary drive means **(M3)** with the main drive means (**M1**);
o allow the supply of blanks **(3)** to the treatment unit **(12)** .

10. Method for controlling an installation **(1)** for producing containers according to one of the preceding claims, which comprises the operations, commanded by the control unit **(11),** consisting in:
∘ as long as no fault is detected at least in the forming unit **(4),** synchronizing the auxiliary drive means **(M3)** with the main drive means (**M1**), and the secondary drive means **(M2)** with the auxiliary drive means **(M3);**
∘ as soon as a fault is detected in the forming unit **(4)** :
**(A.1)** interrupting the supply of blanks **(3)** to the treatment unit **(12);**
**(A.2)** commanding the desynchronization of the auxiliary drive means **(M3)** from the main drive means (**M1**);
**(A.3)** commanding the stopping of the main drive means (**M1**).

11. Method according to Claim 10, which comprises, as soon as a fault is detected in the forming unit **(4),** the operation consisting in:
**(A.4)** commanding the ejection of the blanks **(3)** that arrive at an ejection point **(PE)** situated upstream of the loading point **(PC).**

12. Method according to Claim 10 or Claim 11, which comprises the operations, commanded by the control unit **(11),** consisting, as soon as it is detected that the forming unit **(4)** is operational, in:
∘ restarting the main drive means (**M1**);
∘ restarting the auxiliary drive means **(M3)** if it is detected that it has stopped;
∘ resynchronizing the auxiliary drive means **(M3)** with the main drive means (**M1**);
∘ allowing the supply of blanks **(3)** to the treatment unit (**12**).
